# EUROPEAN PATENT APPLICATION

(11) **EP 1 232 832 A2**
(43) Date of publication of application: **21.08.2002**
(21) Application number: 02002984.9
(22) Date of filing: 11.02.2002
(51) Int. Cl.: B23Q 11/00

(54) **System to remove swarf from the surfaces of a machine tool**

(30) Priority: 17.02.2001 GB 0103959
(71) Applicant: Cincinnati Machine UK Limited, Birmingham B24 0QU (GB)
(72) Inventor: Bridgwater, Daniel George, Birmingham,B44 8EY (GB)
(74) Representative: Lally, William

(57) **Abstract**

A swarf management system to remove cut material (swarf) from the surfaces of a cutting machine comprises a fluid receptacle (40), pump means (26) to deliver fluid from a sump (19) to the receptacle, and a flow line (48) extending from the receptacle from which fluid flowing from the receptacle may be directed across a machine surface for the removal of swarf therefrom. Outflow means is provided, conveniently in the form of one or more syphons (44,46) to cause fluid to flow from the receptacle only intermittently, thereby producing intermittent large volume flow of fluid over the machine surface.

## Description

This invention is concerned with improvements relating to machine tools, particularly machine tools during use of which large quantities of cut material (conventionally termed "swarf') are produced. The invention has been devised in relation to a vertical cutting machine, particularly for the production of machined metal parts, in which context the invention will hereinafter be described. It is however to be understood that the invention is not limited to this specific context, and may be utilised generally, eg. in turning, milling, drilling, reaming, grinding machines, or in machines designed to operate on non-metallic material, eg. in the production of plastic workpieces. Thus the term "swarf' is to be understood as applying to all cut materials, including both metal and plastics.

In the production of a machined part a cuffing tool, conventionally rotated at high speed, is traversed across a workpiece secured to a machine table mounted for movement above a machine bed, the cutting tool removing metal from the workpiece in stages, the removed metal constituting scrap or swarf. To ensure high quality cutting action, a cutting fluid is conventionally directed to the interface between the cutting tool and the workpiece, providing lubrication for the cutting action, washing cut material from the immediate vicinity of the interface, and to maintain the temperature of the cutting tool at a preferable low temperature.

Cut material falls away from the workpiece onto surfaces of the machine, such as the machine bed or floor, or a cover for the internal machinery of the machine, and particularly for workpieces of aluminium and similar materials having a high cut rate, the build up of swarf can be considerable. For this purpose it is conventional to provide in a machine tool a swarf management system, to remove the swarf from the machine bed, and other surfaces upon which the material may accumulate. The management system may comprise removal means in the form of scraper bars which move across the surface to scrape the material onto a conveyor belt, or means to produce liquid flow streams to wash the material onto the conveyor belt, or both. Where wash bars are utilised, it is difficult to locate these without interference with the normal operational movement of the machine parts, and they may easily be knocked out of position in use.

Where a fluid flow stream is utilised it is conventional practice to utilise the same fluid as is used as the cutting fluid, since inevitably the two streams will become inter-mixed.

Clearly, theoretically, no problem needs to be encountered in maximising the flow of cleaning fluid to ensure a complete removal of swarf from machine surfaces, enabling the scrap material conveniently to be conveyed away from the immediate vicinity of the machine, and for the cutting and cleaning fluids to be separated from the scrap and returned conveniently to a storage tank. However, a large flow rate of cleaning fluid suffers from a number of disadvantages, including the following:
a) the need to retain large volumes of fluid in a tank;
b) the need to provide a large filtering capacity, to filter out scrap material;
c) the need to utilise large pumps to provide a satisfactory flow of the cleaning fluid over the machine surfaces;
d) the loss of water from the cleaning fluid through evaporation;
e) the contamination of the atmosphere with evaporate.

Additionally, currently cutting fluids may comprise oxidation inhibitors, bacteriological inhibitors, lubricants etc., and are thus not inexpensive, and there are thus further disadvantages in utilising high flow rates of liquid for the removal of the scrap.

These problems mean that current swarf management systems are installed only in larger and more expensive machine tools.

According to this invention there is provided a method of cleaning cut material from a machine tool, in which a cleaning fluid is flowed across surfaces of the machine intermittently.

In this manner the cleaning fluid may be flowed at a higher volume than would otherwise be desirable or practical. Thus, a higher flow rate may be utilised periodically to wash larger volumes of swarf from the machine surfaces.

In this manner not only may swarf more easily be removed by the high volume flow, but also the overall flow rate of the cleaning fluid through the system may be reduced.

Preferably cleaning fluid flows across one of the machine surfaces to a channel leading to a sump and further cleaning fluid is flowed through the channel to the sump intermittently. Thus intermittent flows of cleaning fluid may be used to sweep swarf from the cutting surface to the outside of the machine.

Preferably, a continuous flow of cleaning fluid is utilised in the method, the cleaning fluid flowing into a receptacle from which fluid flows periodically in a cleaning operation.

Thus, preferably means is utilised to restrain significant flow of fluid from the receptacle until a substantial volume has accumulated within the receptacle. Conveniently the substantial volume is at least 2 litres and is preferably 5 litres or more.

The intermittent flow from the receptacle may be achieved by the use of valve mechanism, eg. periodic-operating valve mechanism, but preferably is achieved by the use of a syphon, thus obviating the use of moving parts.

Preferably a double syphon is utilised, enabling a high outflow through a large diameter pipe to be achieved with a relatively slow in-feed rate.

Preferably the quantity which is flowed intermittently is between three and twenty litres, conveniently between five and ten litres, and is conveniently outflowed over a period of five seconds or less, eg. two or three seconds.

Thus the outflow rate will typically fall within the range 36-600 litres per minute.

Preferably the time interval between successive outflows is between thirty seconds and two minutes, conveniently an outflow occurring every minute or thereabouts.

Conveniently such outflows are provided at a plurality of parts of the machine, to ensure swarf is washed from all appropriate or desirable surfaces, and in a typical machine four such outflows may be utilised, with independent flow rates and time intervals selected in accordance with the location of the outflow and the quantities to be cleared.

According to this invention there is also provided a machine tool comprising means to flow fluid across one or more surfaces of the machine to remove swarf, said means comprising:
a) a fluid receptacle;
b) means to deliver fluid to the receptacle;
c) a flow line extending from the receptacle to one or more machine surfaces through which fluid may flow from the receptacle in the removal of swarf from the surface; and
d) outflow means to cause fluid to flow from the receptacle through the flow line only intermittently.

Preferably the delivery means comprises a pump operative to pump fluid to the receptacle at a substantially constant flow rate of between 2 and 10 litres per minute, conveniently between 5 and 7 litres per minute, and the outflow means is operative to cause fluid to be delivered therefrom intermittently at a higher rate than the delivery of fluid thereto.

Conveniently said outflow means is operative to cause the receptacle to discharge its contents subsequent to the accumulation in the container of a sufficient quantity of fluid to produce an outflow of a desired intensity (volume or velocity). Preferably said outflow means is operative to produce such an outflow at an interval of between thirty seconds and one hundred and twenty seconds. Preferably the receptacle discharges its contents in a period of time conveniently of between 2 and 7 seconds, conveniently about 3 to 5 seconds, and conveniently the volume of fluid discharged is substantially the whole contents of the receptacle.

Preferably the machine comprises a plurality of such fluid receptacles, such delivery means, such flow line and such outflow means to cause liquid to flow from the receptacle, operative to cause fluid to flow across a plurality of surfaces of the machine to remove swarf.

Preferably the machine comprises a channel leading to a sump into which cutting fluid and swarf are flowed, in which at least one of said plurality of fluid receptacles, delivery means, flow line, and outflow means is operative to cause fluid to flow through the channel intermittently. Conveniently the fluid and swarf are separated in the sump.

Conveniently located in the sump means is a pump means operative to deliver fluid from the sump to the or each receptacle at a substantially constant flow rate.

Preferably such pump means is also operative to delivery fluid to the cutting head of the machine.

According to this invention there is also provided a swarf management system comprising a fluid receptacle, pump means to deliver fluid from a sump to the receptacle, a flow line extending from the receptacle from which fluid flow may be directed across a machine surface for the removal of swarf therefrom, and outflow means to cause fluid to flow from the receptacle through the flow line only intermittently.

There will now be given a detailed description to be read with reference to the accompanying drawings, of two machines which are preferred embodiments of this invention, each having being selected for the purposes of illustrating the invention by way of example, the machines comprising swarf management systems which are also illustrative of the invention in certain of its aspects.

In the accompany drawings:
FIGURE 1 is a schematic perspective view of a first embodiment;
FIGURE 2 is an exploded perspective view of part of the embodiment of Figure 1, showing a sump thereof;
FIGURE 3 shows schematically the means to cause fluid to be delivered from a receptacle of the embodiment of Figure 1 only intermittently;
FIGURE 4 shows schematically a side view of a second embodiment, having a channel through which swarf is flushed;
FIGURE 5 shows schematically a front view of the embodiment of Figure 4; and
FIGURE 6 shows schematically a top view of the embodiment of Figure 4.

The machine which is the first embodiment of this invention is a machine tool of conventional type, which will be described hereinafter only in general terms insofar as it is necessary to understand the present invention. The machine comprises a floor plate 6 above which a machine bed 8 is mounted, and mounted for movement across the machine bed is a machine table 10, to which a workpiece (not shown) may be secured in conventional manner. Extending upwardly from the machine bed is a column 12, comprising guideways 14 on which a cutting head (not shown) may be mounted for movement towards and away from the machine table.

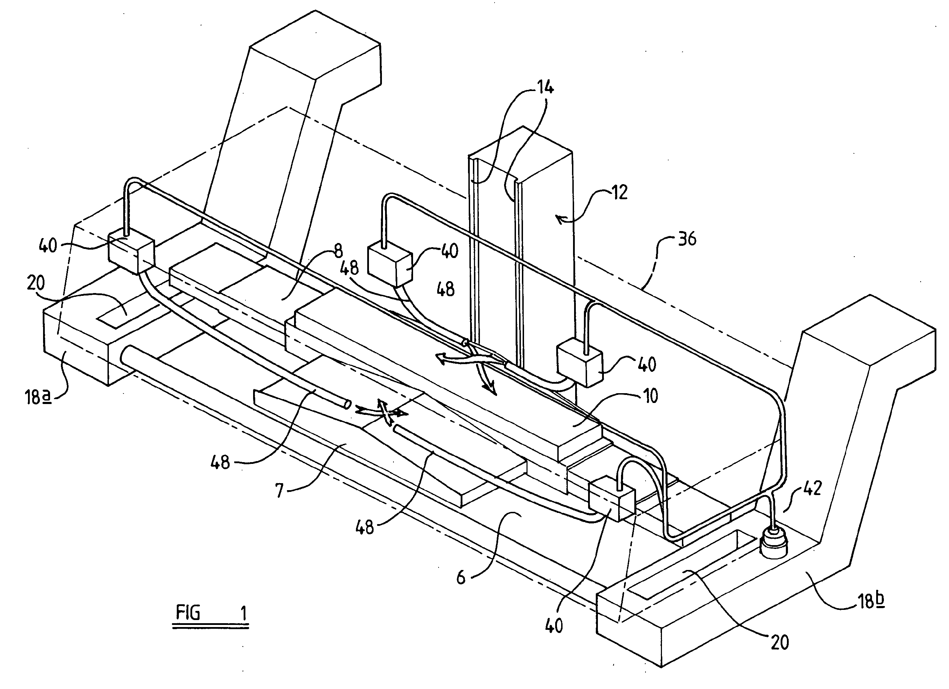

The construction and arrangement will conventionally be such as to permit relative movement to take place between a tool carried by the tool head and a workpiece mounted on the machine table in at least three orthogonal axes, to permit the production of a machine part to a desired design, from a workpiece, the moving parts of the machine being enclosed within a plastic or metal cover 36, shown in dotted lines in Figure 1.

Mounted on the floor plate 6 is a cover 7, within which internal machinery for the machine is located, including for example the machine motor, ball screw drives, and control devices.

In the use of the machine in performing a cutting operation on a workpiece, cut material, typically known as and referred to hereinafter as swarf, will fall onto the machine table, onto the cover, onto the floorplate, and onto other surfaces of the machine, and it is necessary for this material to be removed. For this purpose on either side of the machine is a housing 18, into the interior of which swarf may be caused to move, either by the use of cleaning fluid in conventional manner, or by the use of scraper bars, or by hand.

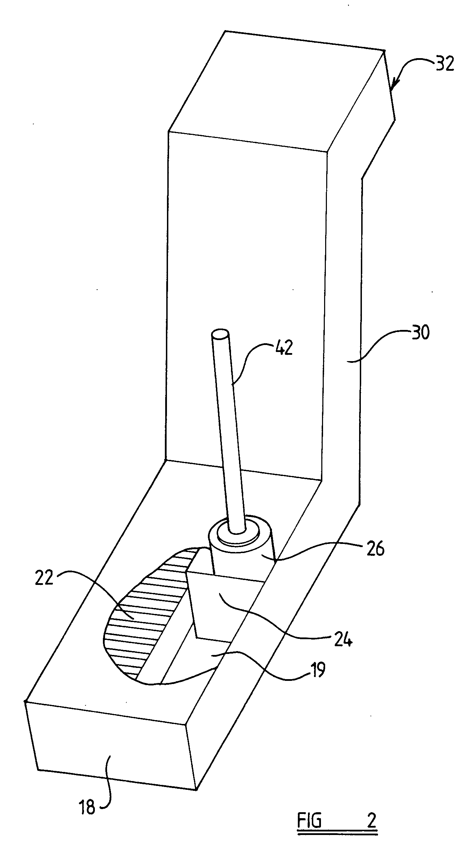

Thus, each housing 18 provides a sump chamber 19 (see Figure 2), into which cutting liquid and cut material may pass conveniently through an opening 20. Located within the sump chamber is a conveyor 22, conveniently a scraper conveyor, operative to transfer solid material from the sump chamber and through an upwardly inclined section 30, to a discharge point 32, from which cut material may be deposited into a container, for accumulation and subsequent removal. During passage of the solid material from the sump chamber, particularly during passage through the inclined section 30, cutting fluid flows backwardly into the sump chamber.

Located in the sump chamber is a pump chamber 24, into which fluid flows from the sump chamber, through a filter material, and from which fluid is flowed by the use of a pump 26, as will hereinafter be described.

Liquid which accumulates in the left hand sump chamber 18a is delivered to the right hand sump chamber 18b by a flow pipe, allowing a single pump 26 to be utilised in the operation of the machine. Thus, conveniently the pump operates, in the preferred embodiment, at a flow rate of 25 litres per minute, 5 litres per minute for each of the receptacles 40, and 5 litres per minute being directed to the cutting head of the machine, for lubrication of the cutting tool during operation. However, as will self-evidently be appreciated, two pumps of smaller capacity may be utilised, one operative within each of the two sump chambers.

Located at any convenient position on the machine, typically at the four locations shown in Figure 1 of the drawings, is a fluid discharge receptacle 40, to which fluid is delivered from the pump 26, and from which fluid flows through an outlet duct 48 directed towards those surfaces of the machine where it is desired to remove accumulated swarf.

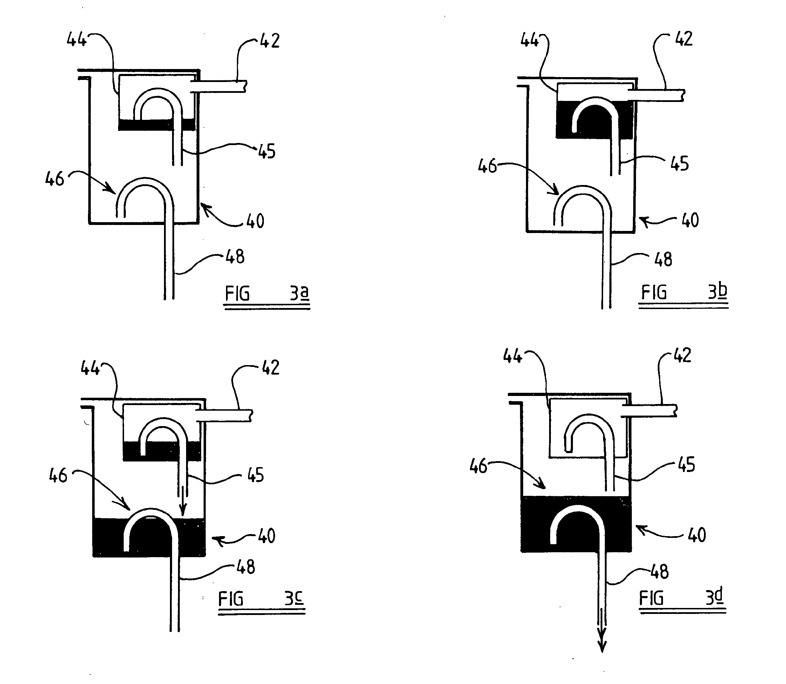

The receptacle 40 is in the form of a double-syphon, comprising a first-stage syphon 44 and a second-stage syphon 46 (see figure 3a). Typically fluid is delivered to the first-stage syphon through a pipe 42, of narrow bore, conveniently provided by hose having diameter of ½" (12.5mm), through which fluid is flowed from pump 26 at a rate of 5 litres per minute. The capacity of the first-stage syphon 44 is typically 2 litres, and thus after 24 seconds or so the first-stage syphon is filled, and liquid is discharged therefrom through the outlet 45 of the first-stage syphon, into the second-stage syphon, conveniently utilising a hose of larger diameter than the inlet 42, typically of 1" diameter (25mm), (see Figure 3b).

The hose forming the syphons has a flattened, generally oval cross-section at the top of its loop, which is wider in the horizontal direction to the vertical direction. This promotes the syphon action and prevents air bubbles forming in the hose.

The capacity of the second-stage syphon 46 is typically 5 litres, and thus after the dispensing into the second stage syphon 46 of (typically) 3 outflows from the first-stage syphon, the second-stage syphon 46 is filled, and liquid is outflowed therefrom through the hose 48, which may be of larger diameter, conveniently 1½" (38mm), (see figure 3d). This enables substantially the entire contents of the second-stage syphon 46 to be dispensed through the outlet 48 within 2 or 3 seconds, producing a high flow rate across the surfaces of the machine, and ensuring a thorough removal of accumulated swarf, to flow onto the floorplate, and through the openings 20 into the sump chambers 19.

As will be seen from Figure 1, the machine which is the first embodiment of this invention comprises four receptacles 40, to each of which liquid is delivered from the pump 26 at the low flow rate of (typically) 5 litres per minute, each of the receptacles 40 producing a high intermittent flow of liquid to wash the surfaces of the machine clear of accumulated swarf.

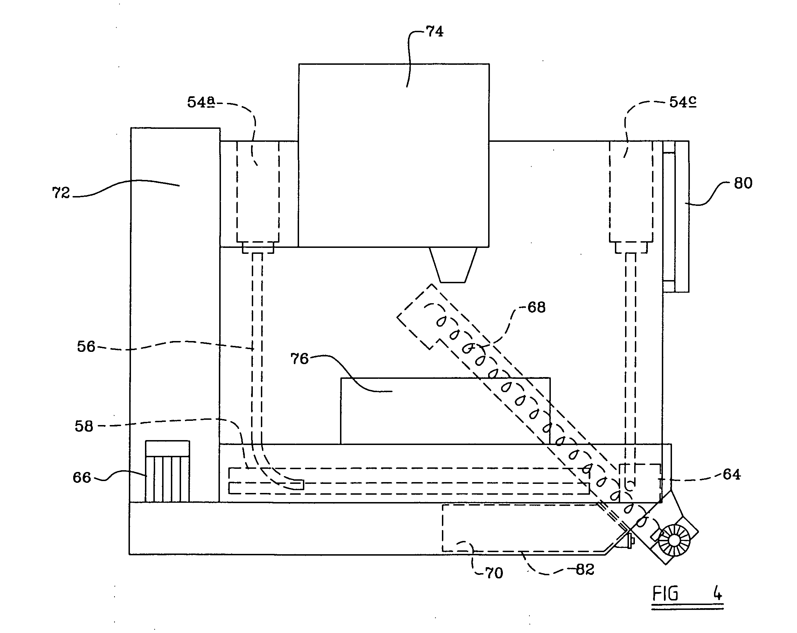

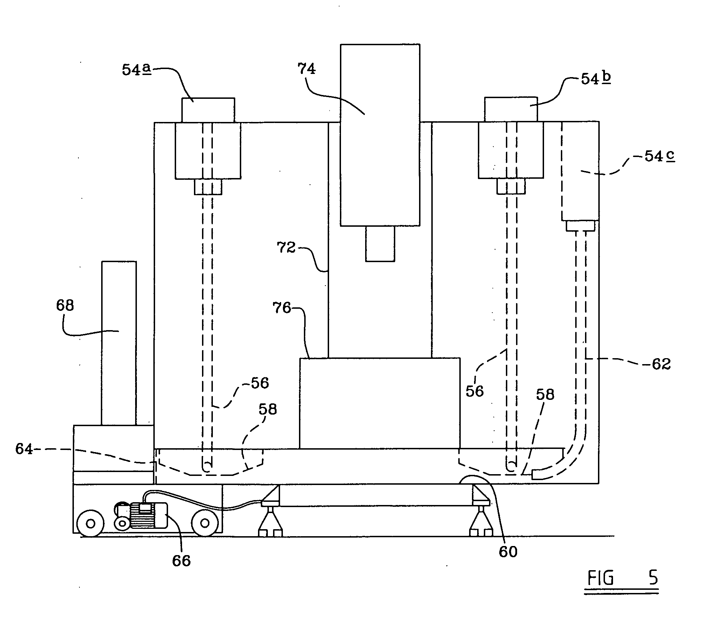

Figures 4, 5 and 6 show a machine which is the second embodiment of this invention, generally of conventional type, which will be described hereinafter only in general terms insofar as it is necessary to understand the present invention. The machine is generally similar to the first embodiment, but conveyers to each side of the machine are replaced by a front flushing system.

The machine has three receptacles 54, two of which indicated by the numerals 54a and 54b are connected to outlet ducts 56 which are located at either side of the machine, towards the rear of the machine. The outlets ducts 56 extend to side gulleys 58, which slope towards a front gully 60, which has a square cross-section. These flushing systems function as described above to wash swarf from the surfaces of the machine.

The third receptacle 54 is connected to an outlet duct 62 extending to one side of the front gully 60. The gully slopes down to an outlet 64 at the other side of the machine. Thus as fluid is intermittently flushed through the gully, swarf is carried across the machine to the outlet 64.

The receptacle 54c which serves the front flushing system 52 is a double syphon system similar to those described in the first embodiment, but preferably having a larger capacity with a first-stage syphon of approximately 2 litres capacity and a second-stage syphon of approximately eight litres capacity. Liquid is delivered to the receptacle from a pump 66, which also delivers liquid to the cutting head and to the each of the other two receptacles, at a rate of approximately 5 litres per minute. The hose which carries outflow from the front flushing receptacle 54c is sized to provide a peak flow from the receptacle of approximately 200 litres per minute, and to outflow the whole of the contents of the second-stage syphon within 2 or 3 seconds. This provides a flow with sufficient force to move the swarf along the front gully 60 of the machine.

The front gully 60 and the side gullies 58 are polished, having a smooth surface which enables swarf to flow more easily through the gullies.

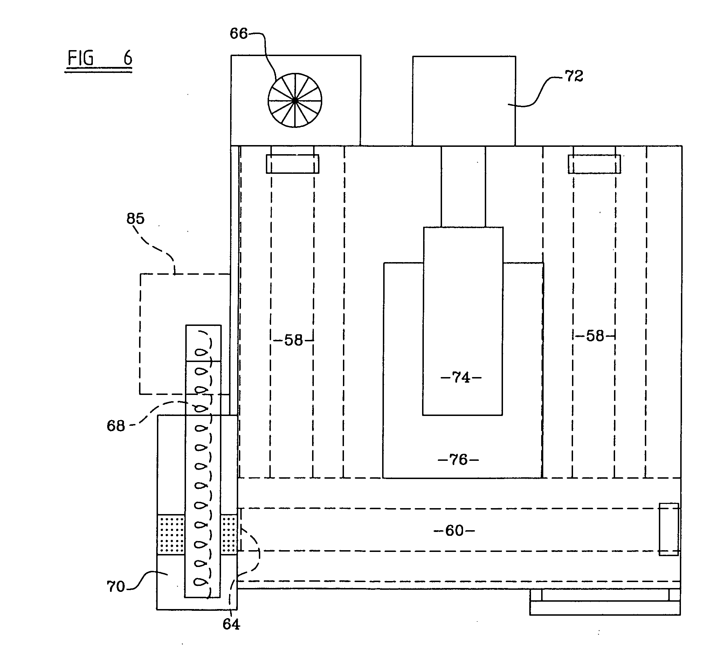

As shown in Figures 4,5 and 6, fluid and swarf flows through the outlet 64 to a sump 70. This contains a tray 82 (Figure 4) having a perforated surface which acts as a filter and enables the fluid to be recirculated. The swarf is then elevated by an auger screw 68 to a height of approximately 1 m. This allows a swarf bin 85 (shown in dotted lines in Figure 6) to be placed under the outlet to collect the swarf.

Figure 6 shows a top view of the front flushing system. The machine tool is shown at the centre of the Figure, comprising a support column 72, a cutting head 74 and a machining table 76. Swarf is flushed to either side of the machining table 76 by the flow of fluid from the cutting head of the machine, and flows into the side gullies 58. The intermittent flushing system described earlier flows the swarf into the front gully 60 and from there through the outlet 64 into the sump 70. The sump 70 has angled internal walls as shown to aid swarf removal, and leads to the system pump 66 which recirculates the fluid back to the three receptacles 54 for the flushing system and to the cutting head.

A control screen is situated at the front of the machine. It provides an overview of the machine's operation and allows the operator to control the machine accordingly.

Whilst in the preferred embodiments the intermittent flow rate is achieved by the use of syphons, other means may be utilised to put the invention into practice if desired.

For example, the receptacle to which fluid is delivered may be provided with a valve mechanism, conveniently time-operated, which may be caused to open at pre-determined periods, to cause the contents of the receptacle to be discharged in a short period of time, to produce the desired "flushing" action

In the present specification "comprise" means "includes or consists of" and "comprising" means "including or consisting of'.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A method of cleaning cut material from a machine tool, in which a cleaning fluid is flowed across surfaces of the machine tool intermittently.

2. A method according to claim 1 wherein the cleaning fluid flows to a channel leading to a sump and further cleaning fluid is flowed through the channel to the sump intermittently.

3. A method according to claim 1 or claim 2 wherein a continuous flow of cleaning fluid is utilised, the cleaning fluid flowing into a receptacle from which fluid flows periodically in a cleaning operation.

4. A method according to claim 3 wherein means is provided to restrain significant flow of fluid from the receptacle until a substantial volume has accumulated within the receptacle.

5. A method according to claim 4 wherein the substantial volume is at least 2 litres, and is preferably 5 litres or more.

6. A method according to any one of the preceding claims wherein the intermittent flow is achieved by the use of a valve mechanism.

7. A method according to any one of claims 1 to 5 wherein the intermittent flow is achieved by the use of a syphon.

8. A method according to any one of the preceding claims wherein the intermittent flow is achieved by the use of a double syphon.

9. A method according to claim 8 wherein the quantity which is flowed intermittently is between 3 and 20 litres, preferably between 5 and 10 litres.

10. A method according to any one of the preceding claims wherein the time interval between successive outflows is between 30 seconds and 2 minutes.

11. A machine tool comprising means to flow fluid across one or more surfaces of the machine to remove swarf, said means comprising:
a) a fluid receptacle;
b) means to deliver fluid to the receptacle;
c) a flow line extending from the receptacle to one or more machine surfaces through which fluid may flow from the receptacle in the removal of swarf from the surface; and
d) outflow means to cause fluid to flow from the receptacle only intermittently.

12. A machine tool according to claim 11 wherein the delivery means comprises a pump operative to pump fluid to the receptacle at a flow rate of between 2 and 10 litres per minute, preferably between 5 and 7 litres per minute.

13. A machine tool according to one of claims 15 and 16 wherein the outflow means is operative to cause fluid to be delivered therefrom intermittently at a higher rate than the delivery of fluid thereto.

14. A machine tool according to any one of claims 11 to 13 wherein said outflow means is operative to discharge the receptacle in a period of time between 2 and 7 seconds, preferably between 3 and 5 seconds.

15. A machine tool according to any one of claims 11 to 14 wherein the volume of fluid discharged is substantially the whole of the contents of the receptacle.

16. A machine tool according to any one of claims 11 to 15 comprising a plurality of such fluid receptacles, said delivery means, said flow line and said outflow means to cause liquid to flow from the receptacle being operative to cause fluid to flow across a plurality of surfaces of the machine.

17. A machine tool according to claim 16 comprising a channel leading to a sump into which cutting fluid and swarf are flowed, in which at least one of said plurality of fluid receptacles, delivery means, flow line and outflow means to cause liquid to flow from the receptacle is operative to cause fluid to flow through the channel intermittently.

18. A machine tool according to claim 17 wherein the fluid and swarf are separated in the sump.

19. A machine tool according to claim 17 or claim 18 comprising a pump means located in the sump and which is operative to deliver fluid to the or each receptacle at a substantially constant flow rate.

20. A machine tool according to any one of claims 17 to 19 wherein the pump means is operative to deliver fluid to the cutting head of the machine.

21. A swarf management system comprising:
a) fluid receptacle;
b) pump means to deliver fluid from a sump to the receptacle;
c) a flow line extending from the receptacle from which fluid flow from the receptacle may be directed across a machine surface for the removal of swarf therefrom; and
d) outflow means to cause fluid to flow from the receptacle only intermittently.

22. A swarf management system according to claim 21 wherein the outflow means is adapted to generate an intermittent flow of between 36 and 600 litres per minute.

23. A swarf management system according to one of claims 21 and 22 wherein the outflow means is operative to produce an outflow every 30 - 120 seconds.
